# EUROPEAN PATENT APPLICATION

(11) **EP 3 605 425 A1**
(43) Date of publication of application: **05.02.2020**
(21) Application number: 18777147.2
(22) Date of filing: 22.03.2018
(51) Int. Cl.: G06Q 20/38, G06Q 40/04

(54) **METHOD AND DEVICE FOR DETERMINING TRANSACTION LEGALITY OF BASED ON BLOCKCHAINS**

(30) Priority: 28.03.2017 CN 201710190499
(71) Applicant: Shanghai Ruiqiwei Network Technology Co., Ltd., Shanghai 200333 (CN)
(72) Inventor: LI, Lizhong, Shanghai 200333 (CN)
(74) Representative: Schmidt, Steffen
(86) International application number: PCT/CN2018/080024
(87) International publication number: WO 2018/177191

(57) **Abstract**

The embodiment of the invention relates to a method and device for determining transaction legitimacy based on a blockchain, comprising: determining transaction information of at least one transaction in the blockchain, wherein the transaction information of each transaction in the at least one transaction comprises account information and the number of digital currencies, the digital currencies corresponding to the transaction information that correspond to at least one identifier, and each identifier uniquely identifies a certain number of digital currencies of a one-level statistical unit; determining the number of digital currencies with the same identifier included in different pieces of transaction information corresponding to the same account according to the account information and the at least one identifier; and when the number of digital currencies with the same identifier included in different pieces of transaction information corresponding to the same account exceeds a threshold value, determining that illegal transactions exist in the account. The determination of illegal transactions through digital currencies is realized, and the possibility of money laundering through digital currencies based on a blockchain is reduced.

## Description

### BACKGROUND OF THE INVENTION

### 1. Technical Field

The invention relates to the technical field of computers, in particular to a method and device for determining transaction legitimacy based on a blockchain.

### 2. Description of Related Art

Money Laundering refers to the act of disguising and concealing the source and nature of illegal income and profits generated therefrom through various means, to make it appear to have come from a legitimate source. The commonly used money laundering method is: illicitly-obtained money is deposited under a certain name first, and then obtains a legal name through a series of transactions or transfers. Most governments have control over money laundering, and financial institutions report transactions with a certain amount (usually stipulated by law) or more to the competent authorities. In order to avoid surveillance, one method is to deposit a large amount of money into several accounts opened under the names of others, these accounts are not related to each other, and then the money is transferred to the account of the offender through remittance, cheque, etc.

Money laundering has caused extremely serious economic, security and social consequences. Money laundering has provided impetus for the operation and development of drug traffickers, terrorists, illegal arms dealers, corrupt government officials and other criminals. Therefore, how to determine money laundering transactions has become an urgent technical problem for those skilled in the art.

### BRIEF SUMMARY OF THE INVENTION

The embodiment of the invention provides a method and device for determining transaction legitimacy based on a blockchain. The determination of illegal transactions through digital currencies is realized, and the possibility of money laundering through digital currencies based on a blockchain is reduced.

In one aspect, the embodiment of the invention provides a method for determining transaction legitimacy based on a blockchain, comprising: determining transaction information of at least one transaction in the blockchain, wherein the transaction information of each transaction in the at least one transaction comprises account information and the number of digital currencies, the digital currencies corresponding to the transaction information correspond to at least one identifier, and each identifier uniquely identifies a certain number of digital currencies of a one-level statistical unit; determining the number of digital currencies with the same identifier included in different pieces of transaction information corresponding to the same account according to the account information and the at least one identifier; and when the number of digital currencies with the same identifier included in different pieces of transaction information corresponding to the same account exceeds a threshold value, determining that illegal transactions exist in the account.

Optionally, the step of determining the number of digital currencies with the same identifier included in different pieces of transaction information corresponding to the same account comprises: determining the number and frequency of digital currencies with the same identifier included in different pieces of transaction information corresponding to the same account;
and the step of determining that illegal transactions exist in the account when the number of digital currencies with the same identifier included in different pieces of transaction information corresponding to the same account exceeds a threshold value comprises:
when the number and frequency of digital currencies with the same identifier included in different pieces of transaction information corresponding to the same account exceed a threshold value, determining that illegal transactions exist in the account.

Optionally, the step of determining that illegal transactions exist in the account when the number of digital currencies with the same identifier included in different pieces of transaction information corresponding to the same account exceeds a threshold value comprises:
according to the number of digital currencies with the same identifier included in different pieces of transaction information corresponding to the same account, conducting weighted calculation according to the identifier, so as to obtain a legitimate score;
and when the legitimacy score exceeds a threshold value, determining that illegal transactions exist in the account.

Optionally, the method further comprises:
conducting alarm locking on the account with illegal transactions, wherein the alarm locking is used for limiting the authority operation of the account with illegal transactions and giving warning that the account with illegal transactions is abnormal.

Optionally, the step of conducting alarm locking on the account with illegal transactions comprises:
transferring the digital currencies corresponding to the illegal transactions of the account with illegal transactions to a judicial supervision account.

In another aspect, the embodiment of the invention provides a device for determining transaction legitimacy based on a blockchain, comprising:
a determining unit, used for determining transaction information of at least one transaction in the blockchain, wherein the transaction information of each transaction in the at least one transaction comprises account information and the number of digital currencies, the digital currencies corresponding to the transaction information correspond to at least one identifier, and each identifier uniquely identifies a certain number of digital currencies of a one-level statistical unit;
a statistical unit, used for determining the number of digital currencies with the same identifier included in different pieces of transaction information corresponding to the same account according to the account information and the at least one identifier;
and a processing unit, used for determining that illegal transactions exist in the account when the number of digital currencies with the same identifier included in different pieces of transaction information corresponding to the same account exceeds a threshold value.

Optionally, the statistical unit is further used for determining the number and frequency of digital currencies with the same identifier included in different pieces of transaction information corresponding to the same account;
and the processing unit is further used for determining that illegal transactions exist in the account when the number and frequency of digital currencies with the same identifier included in different pieces of transaction information corresponding to the same account exceeds a threshold value.

Optionally, the processing unit is further used for, according to the number of digital currencies with the same identifier included in different pieces of transaction information corresponding to the same account, conducting weighted calculation according to the identifier, so as to obtain a legitimacy score; and when the legitimacy score exceeds a threshold value, determining that illegal transactions exist in the account.

Optionally, the device further comprises: a locking unit, used for conducting alarm locking on the account with illegal transactions, wherein the alarm locking is used to limit the authority operations of the account with illegal transactions and giving warning that the account with illegal transactions is abnormal.

Optionally, the locking unit is further used for transferring the digital currencies corresponding to the illegal transactions of the account with illegal transactions to a judicial supervision account.

According to the corresponding relationships of the identifier of digital currencies and the account, it is determined that when the number of the same digital currency in the same account exceeds a threshold value, illegal transactions exist in the account. In this way, the determination of illegal transactions through digital currencies is realized, and the possibility of money laundering through digital currencies based on a blockchain is reduced.

### BRIEF DESCRIPTION OF THE SEVERAL VIEWS OF THE DRAWINGS

Fig. 1 is a scene graph;
Fig. 2 is a flowchart of a method for determining transaction legitimacy based on a blockchain provided by the embodiment of the present invention; and
Fig. 3 is a structural diagram of a device for determining transaction legitimacy based on a blockchain provided by the embodiment of the present invention.

### DETAILED DESCRIPTION OF THE INVENTION

In order to make the purpose, technical scheme and advantages of the embodiments of the present invention clearer, the technical scheme in the embodiments of the present invention will be described clearly and completely below with reference to the drawings in the embodiments of the present invention. Obviously, the described embodiments are part of the embodiments of the present invention, not all of the embodiments. All other embodiments obtained by persons of ordinary skill in the art based on the embodiments of the present invention without creative efforts shall fall within the protection scope of the present invention.

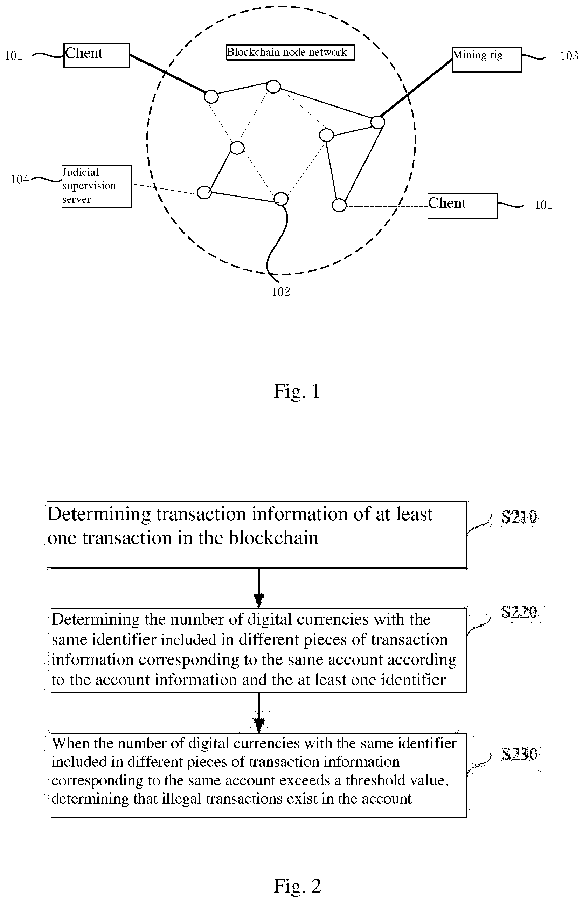

The embodiment of the invention provides a method and device for determining transaction legitimacy based on a blockchain. The method is applicable to the application scenario shown in Fig. 1, which comprises one or more clients 101, such as notebook computers, desktop computers, and mobile terminals; one or more blockchain nodes 102, one or more mining rigs 103, for example, computers with strong graphic computing capabilities, and one or more judicial supervision servers 104, etc.; wherein the one or more clients 101, the one or more judicial supervision servers 104 and the one or more mining rigs 103 are connected to the one or more blockchain nodes 102.

A blockchain is stored in the one or more blockchain nodes 102; the clients 101 are used for generating transaction information; the mining rigs are used for packing the transaction information generated in a period of time and putting it into the blockchain; and the judicial supervision servers 104 are used for supervising the entire transaction.

In the embodiment of the invention, according to the corresponding relation of an identifier of digital currencies and an account, it is determined that when the number of the same digital currency in the same account exceeds a threshold value, illegal transactions exist in the account. In this way, the determination of illegal transactions through digital currencies is realized, and the possibility of money laundering through digital currencies based on a blockchain is reduced.

In order to facilitate the understanding of the embodiments of the present invention, the following will further explain the specific embodiments with reference to the attached drawings. The embodiments do not constitute limitations to the embodiments of the present invention.

Fig. 2 is a flowchart of a method for labeling songs according to the embodiment of the present invention. The method can be implemented through the terminals, mining rigs or blockchain nodes in the scene shown in Fig. 1. As shown in Fig. 2, the method specifically comprises:

S210, determining transaction information of at least one transaction in the blockchain, wherein the transaction information of each transaction in the at least one transaction comprises account information and the number of digital currencies, the digital currencies corresponding to the transaction information correspond to at least one identifier, and each identifier uniquely identifies a certain number of digital currencies of a one-level statistical unit.

During transaction of digital currencies based on block technology, transaction information is generally generated by a client, and a mining rig packs the transaction information within a period of time and puts it into a blockchain, wherein the blockchain can be considered as a distributed account book on which transaction information of all transactions in a system is recorded.

The transaction information within a period of time, for example one month, can be determined for transaction legitimacy analysis.

Or, all historical transaction information can be determined for transaction legitimacy analysis.

It is also possible to determine, once a month, the transaction information within a month for transaction legitimacy analysis, and also determine, once a year, the historical transaction information for transaction legitimacy analysis.

It is also possible to count every certain number of transactions.

Generally, the transaction information includes the transfer-out account, the transfer-in account and the number (i.e., amount) of digital currencies transferred.

Multi-level statistical units of digital currencies correspond to independent and unique identifiers, respectively. Specifically, multi-level separate numbering recording is performed on all digital currencies in the blockchain from the smallest statistical unit to the largest statistical unit. For example, in a blockchain system, assuming that the largest statistical unit of digital currencies is 10, the smallest usage unit is 1, and a digital currency of the smallest unit is 1 satoshi, then there are 10 satoshi in the blockchain system, and the 10 satoshi can be numbered separately, for example, a-j each correspond to one satoshi. It should be noted that this is only an example to make the description easier to understand. In actual application, the smallest usage unit is much smaller than 1, for example, 10⁻⁶, and the largest statistical unit is much larger than 10, for example, 10¹⁶. In this way, each digital currency of the smallest usage unit is unique.

Numbering can also be conducted according to the level of statistical units, for example, the statistical units are Yuan, Jiao or Fen. Then during numbering, Yuan, Jiao, and Fen can be used as the smallest object respectively, so that each Yuan, each Jiao and each Fen can each correspond to a unique identifier.

In addition, considering each transaction, especially the transfer of illegal transactions, the amount of transfer involved is generally much larger than the smallest usage unit. Therefore, numbering can be conducted only in terms of high-level units, for example, numbering can be conducted with Yuan as the smallest object only.

According to the identifier of digital currencies, the identity of digital currencies can be determined, that is, whether or not the same digital currency is included in different pieces of transfer information that can be analyzed.

S220, determining the number of digital currencies with the same identifier included in different pieces of transaction information corresponding to the same account according to the account information and the at least one identifier.

Based on the account, the transfer-out or transfer-in digital currencies corresponding to the same account in the transaction information of at least one transaction are determined, and the cases that the same digital currency appears in the transaction information of the same account at least twice are counted according to the identifier of digital currencies.

Specifically, determining the number and frequency of digital currencies with the same identifier included in different pieces of transaction information corresponding to the same account.

For example, the transaction information of at least one transaction is shown in Table 1.

| Transfer-out account | Transfer-in account | Number | Identifier |
|---|---|---|---|
| A | C | 11 | a, c |
| B | C | 21 | b, n |
| C | D | 30 | a, c, n |
| D | A | 30 | a, c, n |

If digital currencies with identifiers a, c and n are transferred out of account D in one transaction and transferred into account D in another transaction, the frequency of digital currencies with identifiers a, c and n included in different pieces of transaction information corresponding to account D is considered to be 2, and the number is the sum of the numbers of digital currencies corresponding to identifiers a, c and n. If digital currencies with identifiers a and c are transferred out of account A in one transaction and transferred into account A in another transaction, the frequency of digital currencies with identifiers a and c included in different pieces of transaction information corresponding to account A is considered to be 2, and the number is the sum of the numbers of digital currencies corresponding to identifiers a and c.

In addition, since the identifiers of digital currencies are set according to multi-level statistical units and each level corresponds to a weight, when determining the number and frequency of digital currencies with the same identifier included in different pieces of transaction information corresponding to the same account, weighting processing can be performed, for example, the identifier weight corresponding to a large statistical unit is high, and the weight corresponding to a small statistical unit is low.

For example, according to the number of digital currencies with the same identifier included in different pieces of transaction information corresponding to the same account, conducting weighted calculation according to the identifier, so as to obtain a legitimate score; and when the legitimacy score exceeds a threshold value, determining that illegal transactions exist in the account.

S230, when the number of digital currencies with the same identifier included in different pieces of transaction information corresponding to the same account exceeds a threshold value, determining that illegal transactions exist in the account.

Specifically, when the number and frequency of digital currencies with the same identifier included in different pieces of transaction information corresponding to the same account exceed a threshold value, determining that illegal transactions exist in the account.

Since illegal transactions are characterized by a large amount and many times of transfer, a threshold value of the number and frequency of digital currencies with the same identifier included in different pieces of transaction information corresponding to the same account can be set, and only when the threshold value is exceeded can a transaction be considered as a suspected illegal transaction or directly as an illegal transaction.

Conducting alarm locking on the account with illegal transactions, wherein the alarm locking is used for limiting the authority operation of the account with illegal transactions and giving warning that the account with illegal transactions is abnormal.

Transferring the digital currencies corresponding to the illegal transactions of the account with illegal transactions to a judicial supervision account, for further judgment by the regulatory body.

When confirming that there is no illegal transaction in the account, the account and the transactions corresponding to the account can be released. Further, the transactions corresponding to the account can be traced back and transferred back to the judicial supervision account at any time.

According to the corresponding relation of the identifier of digital currencies and the account, it is determined that when the number of the same digital currency in the same account exceeds a threshold value, illegal transactions exist in the account. In this way, the determination of illegal transactions through digital currencies is realized, and the possibility of money laundering through digital currencies based on a blockchain is reduced. Further transactions of the account with illegal transactions are restricted through alarm locking of the account with illegal transactions. The security of illegal currencies is ensured by transferring the digital currencies corresponding to illegal transactions to the judicial supervision account, and the illegal currencies can be traced back and transferred back to the judicial supervision account at any time.

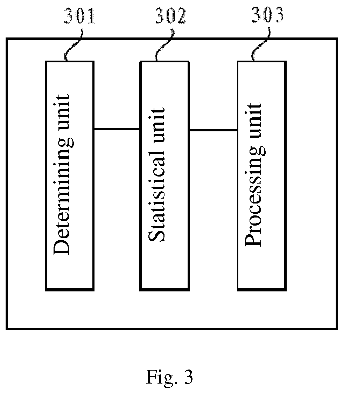

Fig. 3 is a structural diagram of a device for determining transaction legitimacy based on a blockchain provided by the embodiment of the present invention. The device specifically comprises:

a determining unit 301, used for determining transaction information of at least one transaction in the blockchain, wherein the transaction information of each transaction in the at least one transaction comprises account information and the number of digital currencies, the digital currencies corresponding to the transaction information correspond to at least one identifier, and each identifier uniquely identifies a certain number of digital currencies of a one-level statistical unit;
a statistical unit 302, used for determining the number of digital currencies with the same identifier included in different pieces of transaction information corresponding to the same account according to the account information and the at least one identifier;

and a processing unit 303, used for determining that illegal transactions exist in the account when the number of digital currencies with the same identifier included in different pieces of transaction information corresponding to the same account exceeds a threshold value.

In an alternative implementation, the statistical unit 302 is further used for determining the number and frequency of digital currencies with the same identifier included in different pieces of transaction information corresponding to the same account;

and the processing unit 303 is further used for determining that illegal transactions exist in the account when the number and frequency of digital currencies with the same identifier included in different pieces of transaction information corresponding to the same account exceeds a threshold value.

Besides, the processing unit 303 is further used for, according to the number of digital currencies with the same identifier included in different pieces of transaction information corresponding to the same account, conducting weighted calculation according to the identifier, so as to obtain a legitimate score; and when the legitimate score exceeds a threshold value, determining that illegal transactions exist in the account.

In another implementation, the device further comprises: a locking unit, used for conducting alarm locking on the account with illegal transactions, wherein the alarm locking is used for limiting the authority operation of the account with illegal transactions and giving warning that the account with illegal transactions is abnormal.

Further, the locking unit is used for transferring the digital currencies corresponding to the illegal transactions of the account with illegal transactions to a judicial supervision account.

Those skilled in the art should further realize that the units and algorithm steps of the examples described in connection with the embodiments disclosed herein can be implemented in electronic hardware, computer software, or a combination of the two. In order to clearly illustrate the interchangeability of hardware and software, the composition and steps of the examples have been generally described in terms of functions in the above description. Whether these functions are implemented in hardware or software depends on the specific application and design constraints of the technical scheme. Those skilled in the art may use different methods to implement the described functions for each particular application, but such implementation should not be considered outside the scope of the present invention.

The steps of a method or algorithm described in connection with the embodiments disclosed herein may be implemented in hardware, a software module executed by a processor, or a combination of the two. The software module may be placed in a random access memory (RAM), memory, read only memory (ROM), electrically programmable ROM, electrically erasable programmable ROM, register, hard disk, removable disk, CD-ROM, or any other form of storage medium known in the art.

The above-mentioned specific embodiments have further explained the purpose, technical scheme and beneficial effects of the present invention in detail. It should be understood that the above are only specific embodiments of the present invention and are not used to limit the protection scope of the present invention. Any modification, equivalent substitution, improvement, etc. made within the scope of the present invention should be included in the protection scope of the present invention.

## Claims

1. A method for determining transaction legitimacy based on a blockchain, **characterized by** comprising:
determining transaction information of at least one transaction in the blockchain, wherein the transaction information of each transaction in the at least one transaction comprises account information and the number of digital currencies, the digital currencies corresponding to the transaction information correspond to at least one identifier, and each identifier uniquely identifies a certain number of digital currencies of a one-level statistical unit;
determining the number of digital currencies with the same identifier included in different pieces of transaction information corresponding to the same account according to the account information and the at least one identifier;
and when the number of digital currencies with the same identifier included in different pieces of transaction information corresponding to the same account exceeds a threshold value, determining that illegal transactions exist in the account.

2. The method according to claim 1, **characterized in that** the step of determining the number of digital currencies with the same identifier included in different pieces of transaction information corresponding to the same account comprises: determining the number and frequency of digital currencies with the same identifier included in different pieces of transaction information corresponding to the same account;
and the step of determining that illegal transactions exist in the account when the number of digital currencies with the same identifier included in different pieces of transaction information corresponding to the same account exceed a threshold value comprises:
when the number and frequency of digital currencies with the same identifier included in different pieces of transaction information corresponding to the same account exceeds a threshold value, determining that illegal transactions exist in the account.

3. The method according to claim 1 or 2, **characterized in that** the step of determining that illegal transactions exist in the account when the number of digital currencies with the same identifier included in different pieces of transaction information corresponding to the same account exceeds a threshold value comprises:
according to the number of digital currencies with the same identifier included in different pieces of transaction information corresponding to the same account, conducting weighted calculation according to the identifier, so as to obtain a legitimacy score;
and when the legitimacy score exceeds a threshold value, determining that illegal transactions exist in the account.

4. The method according to claim 1 or 2, **characterized by** further comprising:
conducting alarm locking on the account with illegal transactions, wherein the alarm locking is used for limiting the authority operation of the account with illegal transactions and giving warning that the account with illegal transactions is abnormal.

5. The method according to claim 4, **characterized in that** the step of conducting alarm locking on the account with illegal transactions comprises:
transferring the digital currencies corresponding to the illegal transactions of the account with illegal transactions to a judicial supervision account.

6. A device for determining transaction legitimacy based on a blockchain, **characterized by** comprising:
a determining unit, used for determining transaction information of at least one transaction in the blockchain, wherein the transaction information of each transaction in the at least one transaction comprises account information and the number of digital currencies, the digital currencies corresponding to the transaction information correspond to at least one identifier, and each identifier uniquely identifies a certain number of digital currencies of a one-level statistical unit;
a statistical unit, used for determining the number of digital currencies with the same identifier included in different pieces of transaction information corresponding to the same account according to the account information and the at least one identifier;
and a processing unit, used for determining that illegal transactions exist in the account when the number of digital currencies with the same identifier included in different pieces of transaction information corresponding to the same account exceeds a threshold value.

7. The device according to claim 6, **characterized in that** the statistical unit is further used for determining the number and frequency of digital currencies with the same identifier included in different pieces of transaction information corresponding to the same account;
and the processing unit is further used for determining that illegal transactions exist in the account when the number and frequency of digital currencies with the same identifier included in different pieces of transaction information corresponding to the same account exceeds a threshold value.

8. The device according to claim 6 or 7, **characterized in that** the processing unit is further used for, according to the number of digital currencies with the same identifier included in different pieces of transaction information corresponding to the same account, conducting weighted calculation according to the identifier, so as to obtain a legitimate score; and when the legitimate score exceeds a threshold value, determining that illegal transactions exist in the account.

9. The device according to claim 6 or 7, **characterized by** further comprising a locking unit, used for conducting alarm locking on the account with illegal transactions, wherein the alarm locking is used for limiting the authority operations of the account with illegal transactions and giving warning that the account with illegal transactions is abnormal.

10. The device according to claim 9, **characterized in that** the locking unit is further used for transferring the digital currencies corresponding to the illegal transactions of the account with illegal transactions to a judicial supervision account.
